(19) Europäisches Patentamt

European Patent Office

Office européen des brevets

(11) **EP 1 610 595 A1**

(12) **EUROPEAN PATENT APPLICATION**

(43) Date of publication:
**28.12.2005 Bulletin 2005/52**

(51) Int Cl.⁷: **H05B 41/392**

(21) Application number: **04258162.9**

(22) Date of filing: **29.12.2004**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **23.06.2004 JP 2004184590**

(71) Applicant: **Sanyo Tecnica Co. Ltd.
Kawasaki-shi, Kanagawa (JP)**

(72) Inventor: **Okishima, Kiyoshi,
c/o Sanyo Tecnica Co. Ltd.
Kawasaki-shi, Kanagawa (JP)**

(74) Representative: **Smaggasgale, Gillian Helen
W.P. Thompson & Co,
55 Drury Lane
London WC2B 5SQ (GB)**

(54) **High-intensity discharge lamp lighting apparatus and lighting driving method therefor**

(57) The high-intensity discharge lamps lighting apparatus includes an adjusting means that adjusts a pulse width of a rectangular-wave AC voltage. By controlling the pulse width of the rectangular-wave AC voltage using the adjusting means, the pulse width of the rectangular-wave AC voltage applied to the high-intensity discharge lamp is changed, thereby an emission color of the high-intensity discharge lamp can be adjusted.

Fig.1

## Description

### BACKGROUND OF THE INVENTION

1. Field of the Invention

The present invention relates to a high-intensity discharge lamp lighting apparatus for turning on a light source of lighting equipment for a vehicle lamp such as a headlamp of a four-wheeled automotive vehicle or a two-wheeled automotive vehicle. This invention also relates to a lighting driving method therefor.

2. Description of the Related Art

A discharge tube called "high-intensity discharge lamp (hereinafter "HID lamp") " is used as a light source for vehicles. The lighting equipment including this HID lamp will be referred to as an "HID lamp lighting apparatus" hereinafter.

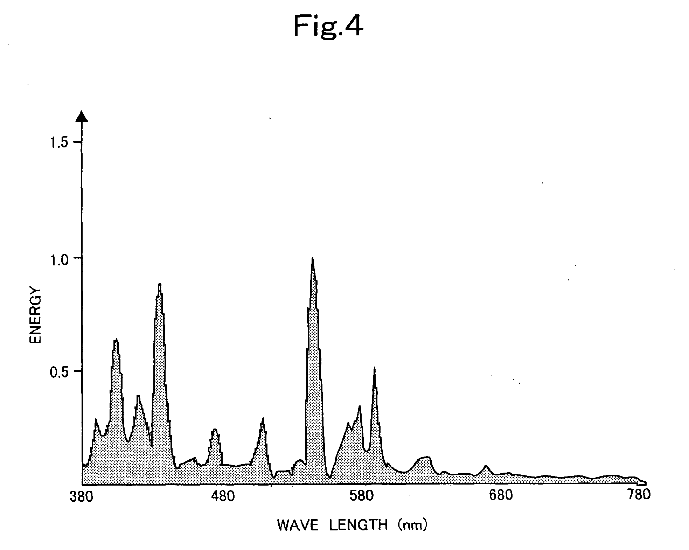

Fig. 4 is a block diagram of a conventional HID alternating-current (AC) lighting apparatus. Conventional techniques related to the present invention will be described with reference to Fig. 4.

Normally, an HID lamp 4 includes two electrodes, and a voltage at a rated voltage of several tens of volts to several hundreds of volts is applied to between the electrodes of the HID lamp 4 through a signal path 70 so as to maintain stable electric discharge. In addition, it is necessary to cause a dielectric breakdown by applying a high voltage of about 20 kilovolts between the electrodes of the HID lamp 4 for a short time so as to start the electric discharge. To this end, an igniter 7 is provided as a trigger circuit.

A battery 1 shown in Fig 4 is a power supply of an automotive vehicle. An output voltage is normally a DC voltage of 12 volts for an ordinary-size vehicle, and a DC voltage of 24 volts for a large-sized vehicle. To obtain a voltage at a rated voltage of several tens to several hundreds of volts, a DC-DC converter 2 that raises the DC voltage of 12 volts to several hundreds of volts is provided.

In case of the AC lighting system, an AC voltage at the frequency of about 250 Hz is applied to the HID lamp 4 in an ordinary lighting operation. This AC voltage is obtained by converting a DC voltage into the AC voltage using a DC-to-rectangular-wave AC conversion circuit 3. As a result, the HID lamp 4 emits a light with a color tone characteristic of the HID lamp 4. It should be noted that the above-mentioned frequency of the AC voltage is only one example.

A light emission principle of the HID lamp is as follows.

A high-voltage pulse is applied between electrodes provided in a light emitting tube, and discharged in a filler gas, thereby a mercury-metal compound provided in the light emitting tube is evaporated, and a light is stably emitted.

The color tone of the HID lamp depends on the type of filler gas, electrode material, electrode structure, catalyst, therefore, emission spectrum depends on a characteristic of the HID lamp itself.

An HID lighting apparatus in which two HID lamps are simultaneously turned on has a disadvantage in that it is difficult to make irregularities in color tones of the two lamps uniform. To make the irregularities in color tones of the two lamps uniform, a replacement operation for replacing the HID lamps by trial and error is required.

An index that physically and objectively represents a color tone is a color temperature in kelvins (K). If a color temperature is low, a color tone is reddy. If the color temperature is high, the color tone is bluey. It is said that a human visibility is high for a reddy emission color, particularly high for irregularities on a road surface.

As a lighting apparatus for changing over a plurality of lamp colors using one lamp, "a lamp color changeover apparatus" disclosed in Japanese Unexamined Patent Publication (KOKAI) No. 7-134902 is known. This apparatus disadvantageously has a complicated mechanical configuration, so that the apparatus cannot be attached without changing an attachment structure.

As the HID lamp lighting apparatus, the HID lamp lighting apparatus disclosed in Tsutomu Shiomi, Takashi Kambara, et al. , "Ballasts for HID Headlamp Systems for Automobiles", Matsushita Electric Works, Ltd. Technical Report, May 2001, pages 13 to 19 is known.

### SUMMARY OF THE INVENTION

The present invention has been achieved in the light of the conventional disadvantages. It is an object of the present invention to provide a novel high-intensity discharge lamp lighting apparatus capable of easily making irregularities in color tones of two lamps uniform, and independently adjusting the color tones irrespectively of the number of high-intensity discharge lamps to be attached, without changing an attachment structure of the high-intensity discharge lamps, or particularly a novel high-intensity discharge lamp capable of changing a color tone of an emission color of each HID by a user's operation, and a lighting driving method therefor.

The present invention achieves the above-noted objects by adopting the following technical constitutions.

The first aspect of the present invention is a high-intensity discharge lamp lighting apparatus comprising: a high-intensity discharge lamp to which a low-frequency rectangular-wave AC driving signal is applied; and adjusting means for adjusting a pulse width of the low-frequency rectangular-wave AC driving signal; wherein a color tone of a light emitted from the high-intensity discharge lamp being controlled by changing the pulse width of the rectangular-wave AC driving signal by the adjusting means.

The second aspect of the present invention is a method for driving a high-intensity discharge lamp to which a low-frequency rectangular-wave AC driving signal is applied, an emitted light of the high-intensity discharge lamp having a first spectrum included in a light output in a first period starting from a signal polarity commutation point of the low-frequency rectangular-wave AC driving signal and a second spectrum included in a light output in a second period subsequent to the first period; the method comprising the steps of: controlling the pulse width of the rectangular-wave AC driving signal; and changing a mixture ratio of the first spectrum to the second spectrum; thereby a color tone of said light emitted from the high-intensity discharge lamp being controlled.

The third aspect of the present invention is a high-intensity discharge lamp lighting apparatus comprising: a high-intensity discharge lamp to which a low-frequency rectangular-wave AC driving signal is applied, an emitted light of the high-intensity discharge lamp having a first spectrum included in a light output in a first period starting from a signal polarity commutation point of the low-frequency rectangular-wave AC driving signal and a second spectrum included in a light output in a second period subsequent to the first period; signal generating means for generating the low-frequency rectangular-wave AC driving signal, a period of which is a sum of the first period and the second period; and ratio changing means for changing a ratio of the first period to the second period; thereby a color tone of a light emitted from the high-intensity discharge lamp being controlled by changing the ratio of the first period to the second period.

The fourth aspect of the present invention is a method for driving a high-intensity discharge lamp to which a low-frequency rectangular-wave AC driving signal is applied, wherein an emitted light of the high-intensity discharge lamp having a first spectrum included in a light output in a first period starting from a signal polarity commutation point of the low-frequency rectangular-wave AC driving signal and a second spectrum included in a light output in the second period subsequent to the first period; the method comprising the steps of: generating the low-frequency rectangular-wave AC driving signal, a period of which is a sum of the first period and the second period; and adjusting a mixture ratio of the first spectrum generated in the first period to the second spectrum generated in the second period; thereby a color tone of a light emitted from the high-intensity discharge lamp being controlled.

The fifth aspect of the present invention is a method in which the first period is a period in that a waveshape of the driving signal varies with a convexed configuration or with a concaved configuration, while the second period is a period in that a waveshape of the driving signal shows a relatively stable configuration.

According to the present invention, even after the HID lamp lighting apparatus is attached to a vehicle, the color tone of the light emitted from the HID lamp can be arbitrarily changed by a user's operation. Therefore, a novel function that enables to set an appropriate brightness and an appropriate color tone in accordance with a surrounding environment of the vehicle can be realized.

The property in which an object appears different according to a light source is called "color rendering". The present invention enables this color rendering to be arbitrarily changed by one HID lamp lighting apparatus without replacing one lamp with another lamp. For example, the lamp according to the present invention can be normally employed by increasing a color temperature, i.e., at a high Kelvin temperature, and employed in a foggy atmosphere by reducing the color temperature, thereby a visibility can be enhanced. Driver's safety is improved, accordingly.

Further, the present invention exhibits the following excellent advantages. Since the color tone can be adjusted, colors emitted from left and right front lights can be easily made uniform, and an HID lamp replacement operation can be simplified. The replacement operation for replacing the HID lamps by trial and error so as to make the irregularities in color tones of the two lamps uniform is particularly eliminated.

An attachment time can be reduced, accordingly.

Moreover, a structure of the lamp according to the present invention is not a special structure and a conventionally standard structure can be used. The HID lamp lighting apparatus according to the present invention is advantageously low in cost and easy to carry out.

Additionally, the HID lamp lighting apparatus according to the present invention can be used for illumination of a product showroom, a show window, or the like, and can emit a light equal in spectrum to a natural light such as "daytime light in a fine weather", "light in a cloudy weather", or "solar light at noon" so that an attractive appearance of a product sensitive to a light can be produced. The present invention can be, therefore, applied to various fields.

BRIEF DESCRIPTION OF THE DRAWINGS

Fig. 1 is a block diagram that depicts a configuration of an HID lamp lighting apparatus according to one embodiment of the present invention;

Fig. 2 is a waveform view that depicts a waveform of a driving signal applied to an HID lamp of the HID lamp lighting apparatus according to the embodiment of the present invention;

Figs. 3A to 3C are driving signal waveform views for illustrating a control method for changing a color tone;

Fig. 4 shows a measurement example of a spectral distribution characteristic of the HID lamp lighting apparatus according to the present invention;

Fig. 5 shows a measurement example of the spectral distribution characteristic of the HID lamp lighting apparatus according to the present invention; and

Fig. 6 is a block diagram of a conventional HID AC lamp lighting apparatus.

## DESCRIPTION OF THE PREFERRED EMBODIMENT

An embodiment of the present invention will be described hereinafter with reference to the drawings.

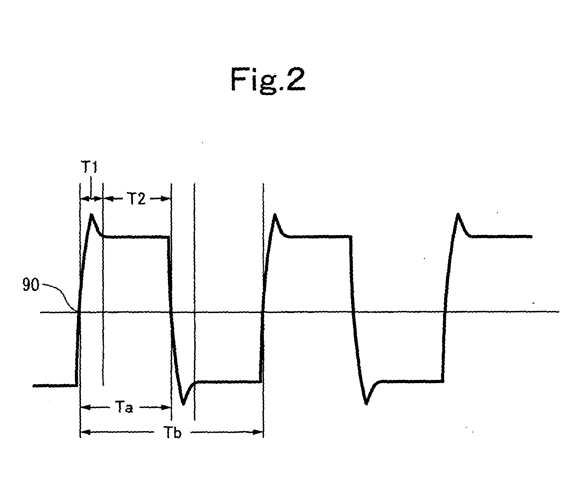

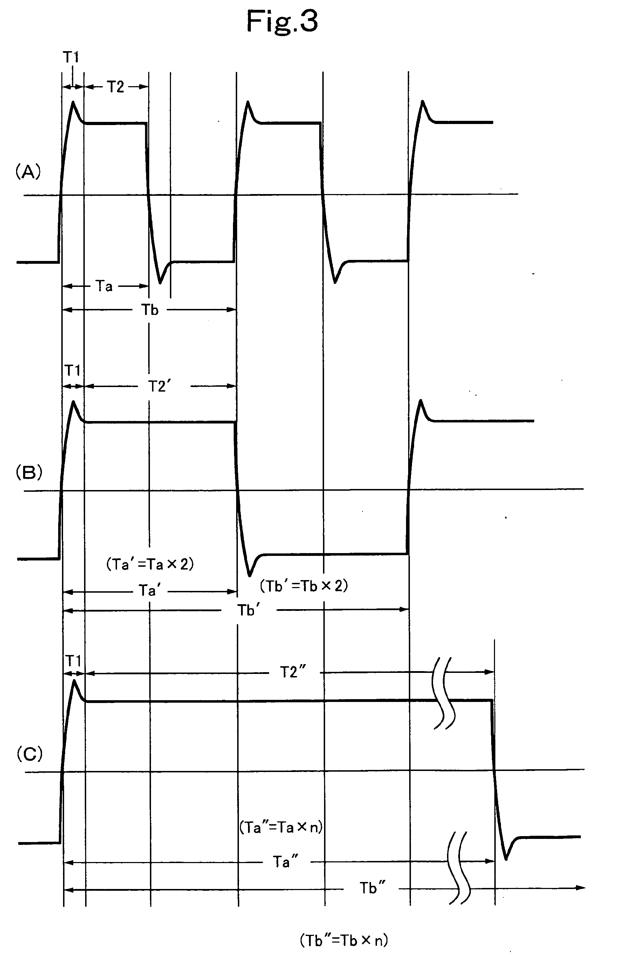

An operation principle of the present invention will be first described with reference to Figs. 2 and 3.

Fig. 2 is a waveform view that depicts a waveform of a driving signal applied to an HID lamp of the HID lamp lighting apparatus according to the present invention.

Referring to Fig. 2, a driving signal for an HID lamp of the HID lamp lighting apparatus according to the present invention is a rectangular-wave AC signal. This rectangular-wave AC signal is a signal which has a repetition period Tb, and a polarity of which is changed from a positive polarity to a negative polarity or vice versa in a half period Ta.

It is assumed herein that a period in which a waveform is transiently changed to a crest (or a trough) from a signal polarity commutation point (a pulse rising or falling point) 90 is T1, and that a subsequent stationary period is T2. In the period T1, a transient phenomenon depending on the HID lamp occurs right after the signal polarity commutation point. The period T1 in which this phenomenon occurs is characteristic of each HID lamp and is a substantially constant value (period).

An optical spectrum of the HID lamp generated in the period T1 exhibits a characteristic that a reddish light at a low color temperature is emitted. An optical spectrum thereof generated in the period T2 has a characteristic that a light at a higher color temperature is emitted. Due to this, a human vision recognizes an optical spectrum that is a mixture of the two optical spectrums in the periods T1 and T2. A change in color tone resulting from this mixture can be controlled by changing a ratio of the period T1, which is a transient response period, to the period T2, which is a stationary period. Namely, by changing the period T2, the optical spectrum that is a mixture of the two optical spectrums can be changed. In this case, the repetition cycle may be constituted so that the periods T2 are continuously changed or discretely changed.

A specific example will be described. When the HID lamp is driven in the cycle, with the period T1 of 150 µS and the period T2 of 2 milliseconds, the color temperature of the HID lamp is 4000K. If the period T2 is gradually lengthened from 2 milliseconds, the color temperature is raised from 4000K toward 5000K. If the period T2 is gradually shortened from 2 milliseconds, the color temperature is lowered from 4000K toward 3000K.

According to the present invention, attention is paid to the fact that each HID lamp has a characteristic optical spectrum in the period T1. Therefore, the present invention provides a novel HID lamp lighting apparatus that includes an adjustment means for changing the period T2. By allowing the adjustment means to change an emission spectrum component of an HID lamp 4 according to a change in the period T2, an emission color of the HID lamp 4 can be adjusted.

Figs. 3A to 3C are driving signal waveform views for illustrating an HID lamp driving method for changing the color tone of the HID lamp 4.

If the transient response period T1 and the stationary period T2 are applied to waveforms shown in Figs. 3A, 3B, and 3C, a color tone in Figs. 3A, 3B, and 3C depends on a ratio of T1 to T2, a ratio of T1 to T2', a ratio of T1 to T2", respectively. Since the periods T2, T2', and T2" satisfy a relationship of T2<T2'<T2", the emission color is closer to a bluish color, that is, the color temperature of the emission color is higher in this order.

A relationship among the periods T1 and T2, the half period Ta, and the period Tb of the driving signal is represented by the following Equations (Eq.1) to (Eq. 4).

$$Ta = T1 + T2 \qquad (Eq.1)$$

$$Tb = Ta \times 2 = (T1 + T2) \times 2 \qquad (Eq.2)$$

If the Equations (Eq.1) and (Eq.2) are divided by T2, respectively, the following Equations (Eq.3) and (Eq.4) can be given.

$$Ta/T2 = T1/T2 + 1 \qquad (Eq.3)$$

$$Tb/T2 = (T1/T2 + 1) \times 2 \qquad (Eq.4)$$

In the Equations, T2>>T1 and T1 is a fixed value. If T2 is changed to T2', T2", ..., the ratio of T1 to T2, i.e., T1/T2 is changed according to the Equations (Eq. 1) to (Eq.4).

The instance in which a length of period is elongated from T2 to T2" has been described above. Conversely, if the period T2 is shortened as T2" to T2 in this order, the emission color is closer to a reddish color, that is, the color temperature is lower in this order.

As stated above, the control over the ratio of the transient response period T1 to the stationary period T2, as the principle of the present invention, can be easily and arbitrarily exercised.

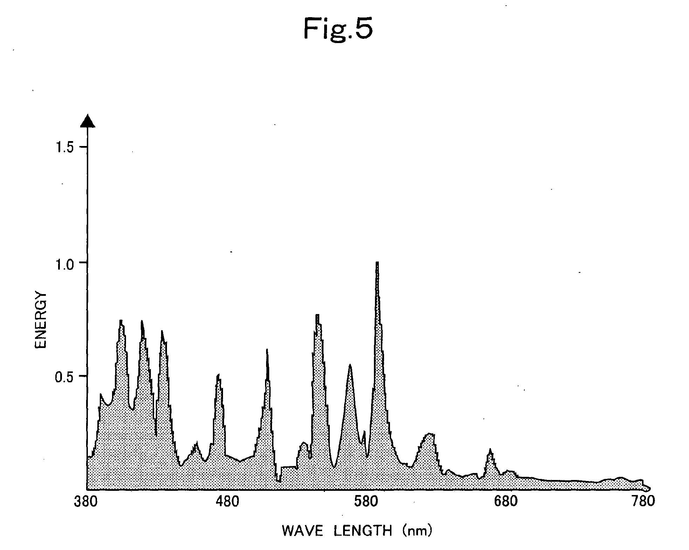

Figs. 4 and 5 show measurement examples of a spectral distribution characteristic (optical spectrum charts) of the apparatus according to the present invention. The spectral distribution characteristic represents an optical energy according to each wavelength. In Figs. 4 and 5, a horizontal axis indicates an optical wavelength (in nanometers (nm)) and a vertical axis indicates optical energy. The spectral distribution characteristics shown in Figs. 4 and 5 are obtained by driving the same HID lamp using the same circuit, and equal in all conditions except for a driving period. The spectral distribution characteristics shown in Figs. 4 and 5 differ in energy distribution according to the optical wavelengths. This comparison, therefore, shows that the present invention is effective.

An instance of a rectangular wave duty ratio of 50% has been described. Alternatively, the duty ratio may be other than 50%.

A constitution of the present invention to realize the above-stated operation will be described.

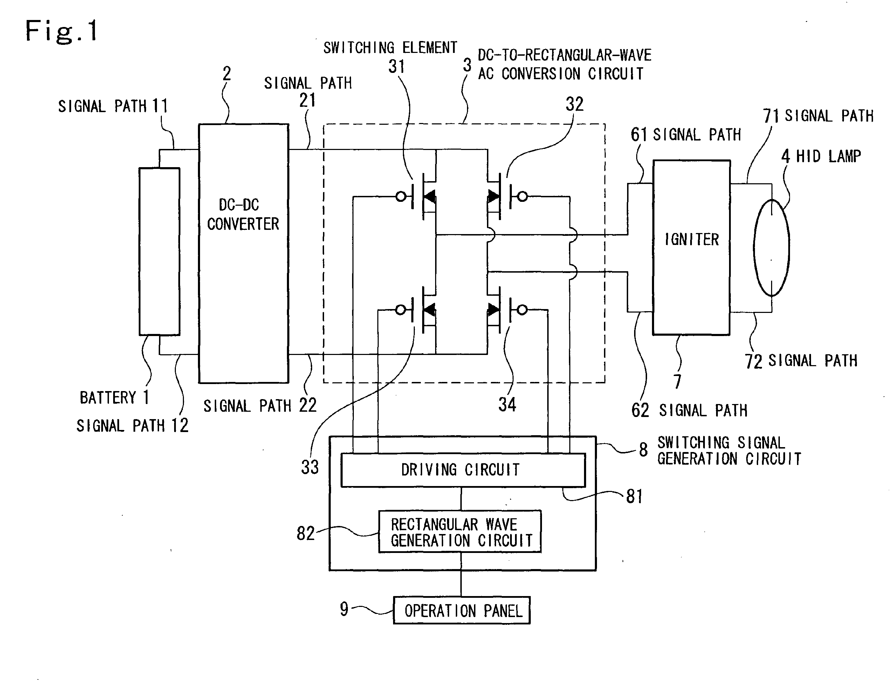

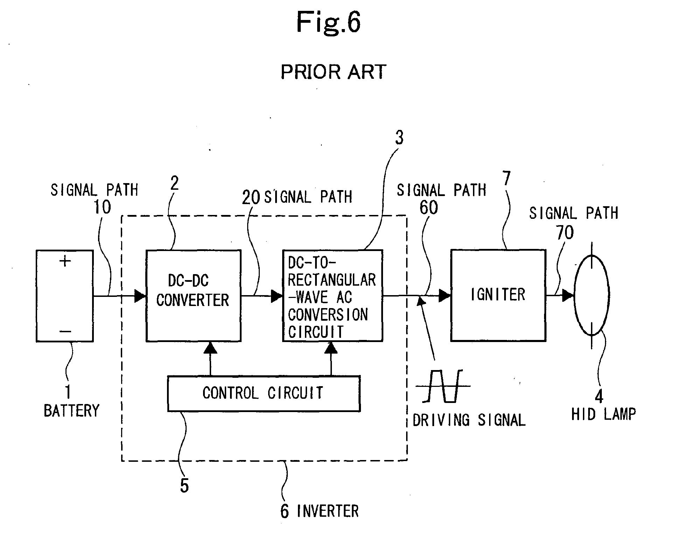

Fig. 1 is a block diagram that depicts a configuration of the HID lamp lighting apparatus according to one embodiment of the present invention. Since the apparatus shown in Fig. 1 is almost equal in configuration to the conventional apparatus shown in Fig. 6, the same constituent elements as those shown in Fig. 6 are denoted by the same reference symbols.

Referring to Fig. 1, the HID lamp lighting apparatus differs from the conventional apparatus shown in Fig. 6 in part of a DC-to-rectangular-wave AC conversion circuit 3 and a switching signal generation circuit 8 that drives switching elements.

A battery 1 supplies a DC voltage of 12 volts to a DC-DC converter 2 via signal paths 11 and 12. The DC-DC converter 2 converts the DC voltage of 12 volts into a DC voltage of several tens to several hundreds of volts, and outputs the resultant DC voltage to signal paths 21 and 22.

The DC-rectangular-wave AC conversion circuit 3 converts the DC voltage of several tens to several hundreds of volts between the signal paths 21 and 22 into a rectangular-wave AC signals at 250 to 500 hertz, and outputs resultant AC signals to signal paths 61 and 62, respectively. The signals between the signal paths 61 and 62 have the signal waveform shown in Figs. 2 and 3A to 3C. The switching signal generation circuit 8 is a generation circuit that generates a signal at 250 to 500 hertz. This switching signal generation circuit 8 is composed by a rectangular-wave generation circuit 82 and a driving circuit 81. The repetition period, i.e., the repetition frequency of the rectangular-wave output from the rectangular-wave generation circuit 82 can be arbitrarily set by an operation panel 9. The rectangular-wave signal output from the rectangular wave generation circuit 82 is supplied to switching elements 31, 32, 33, and 34 in the DC-rectangular-wave AC conversion circuit 3 through the driving circuit 81, so as to control switching of the switching elements 31 to 34. The DC-rectangular-wave AC conversion circuit 3 outputs a rectangular-wave signals, as shown in Figs. 2 and 3A to 3C, to the signal paths 61 and 62. An igniter 7 supplies a high-voltage pulse to the HID lamp 4 only when starting to turn on the HID lamp 4.

With the above-stated configuration and operation, the signal shown in Figs. 2 and 3A to 3C is supplied to the HID lamp 4 through signal paths 71 and 72, thereby the emission color of the HID lamp 4 can be changed.

The operation panel 9 in this embodiment may be an ON/OFF switchover device using a button, a continuously variable switchover device such as a slide resistor, a multipoint switchover device of selecting several types, or the like. A setting of the switchover may be a semi-fixed setting using a tool such as a driver. This switchover maybe either continuously variable switchover or discrete switchover.

Further, an HID lamp color temperature detecting means may be provided in place of the operation panel 9 so as to control the color temperature of the emission light to be equal to a preset color temperature.

**Claims**

1. A high-intensity discharge lamp lighting apparatus comprising:

   a high-intensity discharge lamp to which a low-frequency rectangular-wave AC driving signal is applied; and
   adjusting means for adjusting a pulse width of said low-frequency rectangular-wave AC driving signal;

   wherein a color tone of a light emitted from said high-intensity discharge lamp being controlled by changing said pulse width of said rectangular-wave AC driving signal by said adjusting means.

2. A method for driving a high-intensity discharge lamp to which a low-frequency rectangular-wave AC driving signal is applied, an emitted light of said high-intensity discharge lamp having a first spectrum included in a light output in a first period starting from a signal polarity commutation point of said low-frequency rectangular-wave AC driving signal and a second spectrum included in a light output in a second period subsequent to said first period;
   said method comprising the steps of:

   controlling said pulse width of said rectangular-wave AC driving signal; and
   changing a mixture ratio of said first spectrum to said second spectrum;
   thereby a color tone of said light emitted from said high-intensity discharge lamp being controlled.

3. A high-intensity discharge lamp lighting apparatus comprising:

> a high-intensity discharge lamp to which a low-frequency rectangular-wave AC driving signal is applied, an emitted light of said high-intensity discharge lamp having a first spectrum included in a light output in a first period starting from a signal polarity commutation point of said low-frequency rectangular-wave AC driving signal and a second spectrum included in a light output in a second period subsequent to said first period;
> signal generating means for generating said low-frequency rectangular-wave AC driving signal, a period of which is a sum of said first period and said second period; and
> ratio changing means for changing a ratio of said first period to said second period; thereby a color tone of a light emitted from said high-intensity discharge lamp being controlled by changing the ratio of said first period to said second period.

4. A method for driving a high-intensity discharge lamp to which a low-frequency rectangular-wave AC driving signal is applied, wherein an emitted light of said high-intensity discharge lamp having a first spectrum included in a light output in a first period starting from a signal polarity commutation point of said low-frequency rectangular-wave AC driving signal and a second spectrum included in a light output in said second period subsequent to said first period;
   said method comprising the steps of:

> generating said low-frequency rectangular-wave AC driving signal, a period of which is a sum of said first period and said second period; and
> adjusting a mixture ratio of said first spectrum generated in said first period to said second spectrum generated in said second period;
> thereby a color tone of a light emitted from said high-intensity discharge lamp being controlled.

5. A method according to claim 2 or 4, wherein the first period is a period in that a waveshape of said driving signal varies with a convexed configuration or with a concaved configuration, while the second period is a period in that a waveshape of said driving signal shows a relatively stable configuration.

Fig.1

SWITCHING ELEMENT 31
DC-TO-RECTANGULAR-WAVE AC CONVERSION CIRCUIT 3
SIGNAL PATH 11
SIGNAL PATH 21
2
32
61 SIGNAL PATH
71 SIGNAL PATH
4 HID LAMP
DC-DC CONVERTER
IGNITER
72 SIGNAL PATH
BATTERY 1
SIGNAL PATH 12
SIGNAL PATH 22
33
34
62 SIGNAL PATH
7
8 SWITCHING SIGNAL GENERATION CIRCUIT
DRIVING CIRCUIT
81
82
RECTANGULAR WAVE GENERATION CIRCUIT
9
OPERATION PANEL

EP 1 610 595 A1

# Fig.2

# Fig.3

(A)

T1

T2

Ta

Tb

(B)

T1

T2′

(Ta′=Ta×2)

Ta′

(Tb′=Tb×2)

Tb′

(C)

T1

T2″

(Ta″=Ta×n)

Ta″

Tb″

(Tb″=Tb×n)

# Fig.4

# Fig.5

# Fig.6

## PRIOR ART

SIGNAL PATH 10

2

20 SIGNAL PATH

3

SIGNAL PATH 60

7

SIGNAL PATH 70

+

−

DC-DC CONVERTER

DC-TO-RECTANGULAR -WAVE AC CONVERSION CIRCUIT

IGNITER

CONTROL CIRCUIT

1 BATTERY

5

6 INVERTER

DRIVING SIGNAL

4 HID LAMP

**European Patent Office**

**EUROPEAN SEARCH REPORT**

Application Number

EP 04 25 8162

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 680 582 B1 (CAMMACK DAVID ALAN) 20 January 2004 (2004-01-20) | 1 | H05B41/392 |
| Y | * column 1, lines 8-11 * <br> * column 2, lines 16-67; figures 1-12 * <br> * column 3, line 49 - column 8, line 50 * <br> ----- | 2-5 | |
| X | US 6 441 564 B1 (GU HONGYAN ET AL) 27 August 2002 (2002-08-27) | 1 | |
| A | * column 3, lines 4-44; figure 1B * <br> * column 4, lines 26-59 * <br> ----- | 2-5 | |
| X | US 5 828 178 A (YORK ET AL) 27 October 1998 (1998-10-27) <br> * abstract; figures 2,3A-4F * <br> ----- | 1 | |
| Y | WO 2004/045257 A (GREENWOOD, SIMON, RICHARD; SOAR, STEPHEN) 27 May 2004 (2004-05-27) <br> * the whole document * <br> ----- | 1-6 | |
| Y | PATENT ABSTRACTS OF JAPAN vol. 2003, no. 10, 8 October 2003 (2003-10-08) -& JP 2003 168588 A (MATSUSHITA ELECTRIC WORKS LTD), 13 June 2003 (2003-06-13) <br> * abstract; claims 1,2; figures 1-6 * <br> ----- | 1-6 | **TECHNICAL FIELDS SEARCHED** (Int.Cl.7) <br><br> H05B |
| Y | GB 2 212 995 A (* ROCKWELL INTERNATIONAL CORPORATION) 2 August 1989 (1989-08-02) <br> * page 3, line 4 - page 4, line 3; figure 2 * <br> * page 5, line 1 - page 11, line 9 * <br> ----- | 1-6 | |

The present search report has been drawn up for all claims

| Place of search | Date of completion of the search | Examiner |
|---|---|---|
| Munich | 28 April 2005 | Brosa Gonzalez, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 25 8162

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2005

| Patent document cited in search report | | Publication date | Patent family member(s) | | Publication date |
|---|---|---|---|---|---|
| US 6680582 | B1 | 20-01-2004 | CN<br>WO<br>EP<br>JP<br>US | 1401208 A<br>0230162 A2<br>1327382 A2<br>2004511071 T<br>2002041165 A1 | 05-03-2003<br>11-04-2002<br>16-07-2003<br>08-04-2004<br>11-04-2002 |
| US 6441564 | B1 | 27-08-2002 | JP | 2001006611 A | 12-01-2001 |
| US 5828178 | A | 27-10-1998 | NONE | | |
| WO 2004045257 | A | 27-05-2004 | WO<br>AU | 2004045257 A1<br>2002368347 A1 | 27-05-2004<br>03-06-2004 |
| JP 2003168588 | A | 13-06-2003 | NONE | | |
| GB 2212995 | A | 02-08-1989 | JP | 1137599 A | 30-05-1989 |